# EUROPEAN PATENT SPECIFICATION

(11) **EP 3 041 878 B1**
(45) Date of publication and mention of the grant of the patent: **30.08.2017**
(21) Application number: 14780653.3
(22) Date of filing: 04.09.2014
(51) Int. Cl.: C08G 59/06, C08G 59/50, C09D 163/00

(54) **COATING COMPOSITION**
BESCHICHTUNGSZUSAMMENSETZUNG
COMPOSITION DE REVÊTEMENT

(30) Priority: 06.09.2013 US 201361874437 P
(43) Date of publication of application: 13.07.2016
(73) Proprietor: Dow Global Technologies LLC, Midland, MI 48674 (US)
(72) Inventor: MINNIKANTI, Venkat S., Delray Beach, FL 33445 (US); PFARHERR, Marcus, 88441 Mittelbiberach (DE); MICHALSKI, Eva-Maria, 76547 Sinzheim (DE); VYAKARANAM, Kamesh R., Midland, Michigan 48674 (US); HEATH, William H., Lake Jackson, TX 77566 (US); CHANG, Kwanho, Lake Jackson, TX 77566 (US); TURAKHIA, Rajesh H., Lake Jackson, TX 77566 (US); FALSARELLA, Larissa, Rosharon, TX 77583 (US); COLSON, Adam C., Lake Jackson, TX 77566 (US)
(74) Representative: Beck Greener
(86) International application number: PCT/US2014/053989
(87) International publication number: WO 2015/034983

(56) References cited:
- WO-A1-96/16109
- US-A- 5 218 063
- US-A1- 2001 009 952

## Description

### Field

Embodiments relate to a flooring coating composition that includes a coating agent that is a reaction product of an epoxy based formulation, which is one of an epoxy prepolymer formulation, an epoxy-silane hybrid formulation, epoxy thiol acrylate formulation, and an epoxy amine acrylate formation.

### Introduction

Forming a multilayered flooring structure involves sequentially lying down various layers on a base substrate, e.g., ones of an epoxy layer, a polyurethane layer, a flooring layer, and other floor coatings. The multilayer floor structure may be used for car parks, industrial buildings as chemical resistant floorings, secondary containment for ground water protection, bridge gaps, motor ways, etc. Each of the layers may impart different functionalities to the multilayered flooring structure such as one of providing adhesion to an underlying substrate, providing the capability to bridge cracks originating under a bottom surface, providing chemical resistance on a top surface, and providing abrasion resistance and/or mechanical integrity to withstand wear and tear. However, since applying the various layers is labor intensive and involves long periods of time to allow for curing during the application process, a reduction in the total number layers in the multilayered flooring structure is sought.

Further, in regions with frigid winters, flooring needs to provide good performance, flexibility, and elongation at low temperatures (e.g., at a temperature of less than 0°C). However, typical epoxies used for flooring applications have glass transition temperatures above room temperature, which makes such epoxies brittle at low temperatures. Consequently, sometimes phenol blocked isocyanates are added to the epoxy formulations as flexibilizing agents, which phenol block isocyanates provide flexibility in the epoxy layers, e.g., as discussed in U.S. Patent No. 5,098,780. The phenol blocked isocyanates typically include nonylphenol (e.g., DESMOCAP 12A, available from Bayer Material Science and disclosed as a flexibilizing agent in U.S. Patent No. 5,098,780, is described as a 4-nonylphenol blocked linear aromatic urethane polymer). Nonylphenol unblocks, e.g., releases, the isocyanate moiety at specific temperatures, and the released isocyanate can bond with amines and secondary alcohols present in the epoxy formulation. However, the phenol blocked isocyanates are typically high in viscosity and do not provide flexibility at low temperatures. Further, use of nonylphenol has been restricted in view of toxicity concerns to humans and the environment. Accordingly, an alternative is sought.

US5218063 discloses a coating composition comprising an epoxy oligomer and having two glass transition temperatures.

### Summary

Embodiments may be realized by providing a flooring coating composition that includes a coating agent that is a reaction product of an epoxy based formulation, and the epoxy based formulation is at least one of an epoxy prepolymer formulation, an epoxy-silane hybrid formulation, an epoxy thiol acrylate formulation, and an epoxy amine acrylate formation.

The coating agent in a cured state exhibits a first tan delta peak between a first temperature range of -75 °C to 0 °C and a second tan delta peak between a second temperature range of 20 °C and 75 °C, according to a tan delta plot over a range of temperatures. A value of the first tan delta peak and a value of the second tan delta peak each represents a ratio of a loss modulus of the coating agent and a storage modulus of the coating agent at a specific temperature within the range of temperatures, as measured according to dynamic mechanical thermal analysis, and the values of the first and the second tan delta peaks are from 0.10 to 0.80.

### Detailed Description

A single layer in a multilayered flooring structure may be based on either epoxy or polyurethane chemistry. An epoxy layer may be used as a primer layer to allow for other flooring layers to adhere to an underlying substrate (e.g., a steel substrate, a concrete substrate, etc.). A separate flexible polyurethane layer may be applied to impart the capability of bridging cracks between the underlying substrate and an upper portion of the multilayered flooring structure. The concept of bridging cracks relates to the capacity to extend across a gap in an underlying substrate to reduce the possibility of the crack resulting in the formation of another crack in an above lying layer. The ability to bridge cracks is sought because a floor is subject to natural or artificial thermal cycles, traffic loads, and other elements that can cause an underlying substrate to crack, and these cracks can spread to the top surface of multilayer flooring structure in the absence of proper protection. Further, since the upper portion of the multilayered flooring structure may include top layers for added functionalities such as chemical resistance, mechanical wear resistance, abrasion resistance, water impermeability, etc., a crack in the upper portion would diminish the lifespan of the flooring structure.

Embodiments relate to a coating composition that uses epoxy based hybrid chemistry to create a multipurpose single layer suitable for flooring applications, e.g., that forms a coating layer that is a combined flexible layer and a mechanical wear resistant top layer, a combined flexible layer and chemical resistant top layer, or a combined flexible layer and primer layer. In particular, the multipurpose single layer provides both the flexible characteristics (e.g., with respect to crack bridging capacity) of a polyurethane layer and the mechanical wear resistant characteristics of an epoxy top coat. Thus, the multipurpose single layer forms an epoxy based flexible crack bridging layer. Further, embodiments relate to excluding the use of substantially any nonylphenol containing flexiblizing agents when forming the multipurpose single layer.

The multipurpose single layer is an epoxy-based layer that is formed by applying a coating agent on a flooring structure, e.g., on a base substrate. The coating agent is a reaction product of one of an epoxy prepolymer formulation, an epoxy-silane hybrid formulation, an epoxy thiol acrylate formulation, and an epoxy amine acrylate formulation. Each of the epoxy prepolymer formulation, the epoxy-silane hybrid formulation, the epoxy thiol acrylate formulation, and the epoxy amine acrylate formulation may be independently used or may be used in any combination thereof to form the multipurpose single layer. The multipurpose single layers formed using the epoxy prepolymer formulation, the epoxy-silane hybrid formulation, the epoxy thiol acrylate formulation, and the epoxy amine formulation exhibit a phase-separated morphology in which a combined glass-rubber state is realized over a range of temperatures.

For example, the multipurpose single layers in a cured state each exhibit glass transition temperatures (Tg) in a temperature range from -75 °C to 0°C and 20 °C to 75 °C. Whereas, Tg is the reversible change of amorphous material or amorphous regions of a partially crystalline material of the multipurpose single layer, from (or to) a viscous or rubbery condition to (from) a hard and relatively brittle condition. In viscoelastic materials such as the multipurpose single layers, a maximum dissipation of energy occurs as heat at the Tg. Accordingly, in the multipurpose single layers, the dissipation of energy is separated out over a range of temperatures so that distinct transitions between glass and rubber phases are realized in the range of -75 °C to 0 °C and 20 °C to 75 °C. According to exemplary embodiments, distinct transitions between the glass and rubber phases may be realized in the ranges of at least one of the following: -75 °C to -25 °C and 25 °C to 75 °C, -75 °C to -35 °C and 30 °C to 75 °C, and -60 °C to -35 °C and 30 °C to 70 °C.

Without intending to be bound by this theory, the presence of distinct glass transition temperatures may ensure that at any temperature between these two glass transition temperatures, a rubbery phase that has already transitioned from a brittle glassy phase into a rubber state and a brittle glassy phase that is yet to transition into a rubbery state co-exist. This allows for a more uniform mechanical behavior with changes in temperature between the two glass transition temperatures of the respective phases. For example, the presence of rubbery phase allows for material that is deformable and the presence of a rigid glassy phase provides a reinforcing mechanism that increasing the hardness, tensile strength, and mechanical integrity of the material. The ability to deform is sought, e.g., for the ability to bridge cracks in a flooring layer. In contrast, materials that exhibit only one glass transition temperature are completely a glass below the glass transition temperature and hence brittle and unable to provide the ability to bridge cracks in a floor. Such a single glass transition material is also completely a rubber above the glass transition temperature, where the material does not have sufficient mechanical strength to provide mechanical integrity and potentially chemical resistance to a floor.

The effectiveness of the viscoelastic materials in energy dissipation may be evaluated by measuring the materials' viscoelastic response to a stress-strain cycle in the form of dynamic mechanical tests, and the results are given in terms of storage modulus and loss modulus.

According to an embodiment, dynamic mechanical thermal analysis (DMTA) may be used for determining the viscoelastic properties of the multipurpose single layers. In particular, DMTA is used to measure storage modulus (G'), loss modulus (G"), and glass transition temperature, as a function of temperature. A tan delta (tan δ) plot is also generated, resulting from the loss modulus divided by the storage modulus (G"/G') as a function of temperature (i.e., tan δ is a measure of the ratio of energy dissipated as heat to maximum energy stored in the material). Accordingly, tan δ increases to a peak (i.e., an uppermost point along a rising peak of a tan δ plot) at a temperature in which the energy dissipated as heat approaches the energy stored (e.g., at a time when the glass-rubber phase transition temperature is reached). In a material having the phase separated morphology (i.e., a combined glass-rubber phase), DMTA realizes at least two distinct tan δ peaks. Accordingly, the dissipation of heat is spread out over the range of temperatures between the at least two distinct tan δ peaks, instead of being mainly concentrated around one tan δ peak.

The multipurpose single layer formed using the epoxy prepolymer formulation may offer, e.g., the ability to bridge cracks, mechanical strength, and resistance to common solvents and chemicals. The epoxy prepolymer formulation includes at least one epoxy terminated prepolymer and an amine hardener component. The formation of an exemplary epoxy terminated prepolymer using an epoxy resin and a polyether polymer is representative of the following, in which free epoxy resin agents are present:

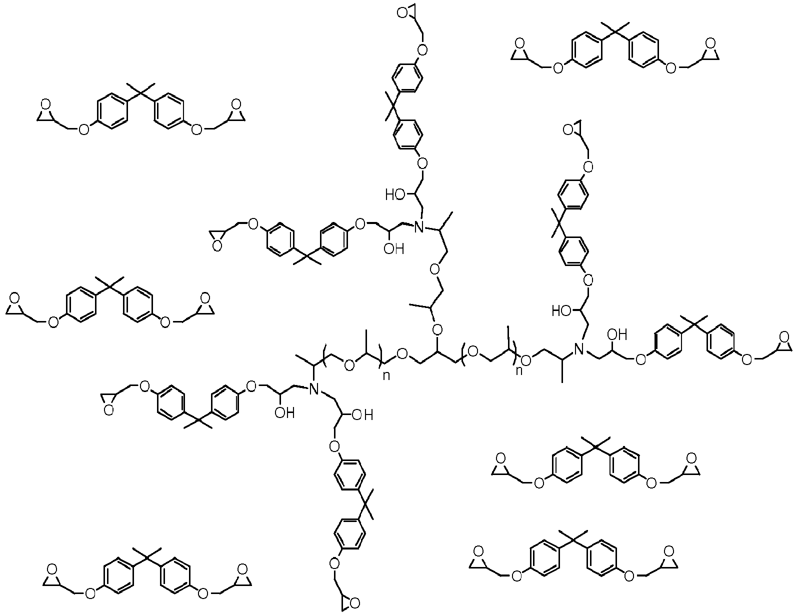

The polyether polymer used to form the epoxy terminated prepolymer may be an amine-containing polyether polymer, e.g., a polyetheramine that has an amine hydrogen functionality from 2 to 8. The polyether polymer may have a number average molecular weight of at least 1000 (e.g., from 1000 to 10,000). The epoxy terminated prepolymer may be formed by using an excess amount of an epoxy resin (e.g., an aromatic epoxy resin such as a propoxylated aromatic epoxy resin). For example, a reaction mixture for forming the epoxy terminated prepolymer includes an equivalent weight of the epoxy resin that is at least three times (e.g., from three times to eight times, from four times to eight times, etc.) an equivalent weight of the epoxy resin that is stoichiometrically required for reaction with the polyether polymer to form the epoxy terminated prepolymer in which the free epoxy resin agents are present. For example, from 3 to 8 equivalent weight of epoxy resin may be used for 1 equivalent weight of the polyether polymer. The epoxy resin accounts for 30 wt% to 80 wt% (e.g., 40 wt% to 60 wt%, 45 wt% to 55 wt%, etc.) of a total weight of the epoxy prepolymer.

The at least one epoxy terminated prepolymer is exposed to a curing process, which occurs in the presence of the amine hardener component, in order to form elastomers for a multipurpose epoxy prepolymer layer. The amine hardener component includes at least one amine hardener such as a primary or secondary amino compound. The amine hardener component may include a blend of amine hardeners or an amine prepolymer.

For example, the amine hardener component is present in an epoxy prepolymer formulation in an amount from 10 wt% to 45 wt% (e.g., 15 wt% to 40 wt%, 15 wt% to 35 wt%, etc.), based on a total weight of the epoxy prepolymer formulation. The at least one epoxy terminated prepolymer may account for a remainder of the total weight of the epoxy prepolymer formulation, based on a total of 100 wt%. DMTA analysis of the cured multipurpose epoxy prepolymer based layer exhibits a first tan δ peak that has a value from 0.10 to 0.80 (e.g., 0.10 to 0.30, etc.) at a temperature between -75 °C to 0 °C, and a second tan delta peak that has a value from 0.20 to 0.65 (e.g., 0.30 to 0.60, etc.) at a temperature between 20 °C and 75 °C.

The multipurpose single layer formed using the epoxy-silane hybrid formulation offers, e.g., the ability to bridge cracks, fast cure times, adhesion to various substrates, and low viscosity. The epoxy-silane hybrid formulation includes an epoxy component, an amine component, and a silane component. The epoxy component includes at least one epoxy resin, e.g., an aromatic epoxy resin such as a propoxylated aromatic epoxy resin. The amine component includes at least one amine hardener. The silane component includes at least one silane-modified polymer (SMP) having a polyurethane backbone and silane end groups, and optionally includes at least one silane based additive. The SMP may be a branched or linear polyether-based silylated polymer. The SMP may have a number average molecular weight of from 1000 to 12,000.

For example, the SMP may be obtained by the hydrosilylation of a polymer having at least one unsaturated group and at least one hydroxyl group in each molecule (e.g., a polyoxyalkylene polymer). The hydrosilylated polymers may then be capped by exposing the hydrosilylated polymer to at least one isocyanate to form a composition including isocyanate capped hydrosilylated polymers. The isocyanate capped hydrosilylated polymers may then be reacted with a polyether polyol having a nominal functionality of at least 2 to form the SMP having the polyurethane backbone and the silane end groups.

The epoxy-silane hybrid formulation includes a first part and a second part. The first part includes the epoxy component, and optionally at least one selected from the group of a filler (such as calcium carbonate, talc, etc.), a catalyst, and water. The epoxy component is present in an amount from 20 wt% to 55 wt% (e.g., 30 wt% to 50 wt%, 30 wt% to 45 wt%, etc.), based on a total weight of the epoxy-silane hybrid formulation.

The second part includes the amine component and the silane component, and optionally at least one filler (such as calcium carbonate, talc, etc.). The SMP of the silane component is present in an amount from 20 wt% to 40 wt% (e.g., 25 wt% to 35 wt%, etc.), based on the total weight of the epoxy-silane hybrid formulation. The amine component is present in an amount from 1 wt% to 10 wt% (e.g., 3 wt% to 6 wt%, etc.), based on the total weight of the epoxy-silane hybrid formulation. A total amount of filler in the epoxy-silane hybrid formulation (i.e., in the first and second parts) may be from 15 wt% to 40 wt% (e.g., 15 wt% to 35 wt%, 20 wt% to 30 wt%, etc.), based on the total weight of the epoxy-silane hybrid formulation. As would be obvious to a person of ordinary skill in the art, the above weight percentages are based on a total of 100 wt% of the epoxy-silane hybrid formulation.

The first and second parts of the epoxy-silane hybrid formation are allowed to react with each other in the following reaction stages, in which a backbone of the silane-modified polymer is represented by a line between the silane end groups:

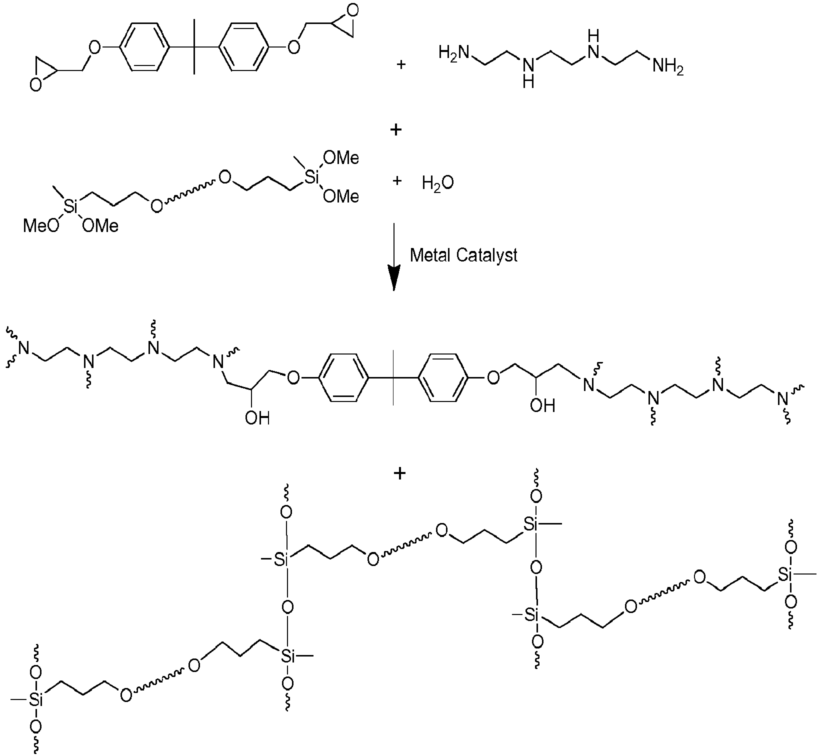

The product of the above reaction stages are cured to form elastomers for the multipurpose epoxy-silane hybrid layer, which includes an epoxy/amine complex and a silane complex. DMTA analysis of the cured multipurpose epoxy-silane hybrid layer exhibits a first tan δ peak that has a value from 0.10 to 0.80 (e.g., 0.50 to 0.80, etc.) at a temperature between -75 °C to 0 °C, and a second tan delta peak that has a value from 0.20 to 0..65 (e.g., 0.20 to 0.40, etc.) at a temperature between 20 °C and 75 °C.

The multipurpose single layer formed using the epoxy thiol acrylate formulation offers, e.g., the ability to bridge cracks, resistance to common solvents and chemicals, mechanical strength, fast cure times, and lower viscosity. The epoxy thiol acrylate formulation includes an epoxy component, an acrylate capped polyol component, and a thiol component. The epoxy component includes at least one epoxy resin, such as a diglycidylether of bisphenol A epoxy resin and/or a diglycidylether of bisphenol F epoxy resin. The acrylate capped polyol component includes at least one compound that includes two acrylate moieties, which acrylate moieties are separated by a polyol backbone (e.g., a polyether polyol backbone). The acrylate capped polyol may have a number average molecular weight from 1000 to 8000. The acrylate capped polyol may be a urethane acrylate. The thiol component includes an at least one selected from the group of an alkyl dithiol and an alkyl trithiol (e.g., the thiol component may include two different alkyl trithiols).

The epoxy thiol acrylate formulation includes a first part and a second part. The first part includes the epoxy component and the acrylate capped polyol component. The epoxy component is present in an amount from 20 wt% to 45 wt% (e.g., 25 wt% to 35 wt%, 30 wt% to 35 wt%, etc.), based on a total weight of the epoxy thiol acrylate formulation. The acrylate capped polyol component is present in an amount from 35 wt% to 60 wt% (e.g., 40 wt% to 55 wt%, 45 wt% to 50 wt%, etc.), based on the total weight of the epoxy thiol acrylate formulation.

The second part includes the thiol component, and optionally at least one catalyst. The thiol component is present in an amount from 15 wt% to 40 wt% (e.g., 20 wt% to 35 wt%, 20 wt% to 30 wt%, etc.), based on the total weight of the epoxy thiol acrylate formulation. As would be obvious to a person of ordinary skill in the art, the above weight percentages are based on a total of 100 wt% of the epoxy-thiol acrylate formulation.

The first part including the epoxy component and the acrylate capped polyol component (the backbone is represented by a line between the acrylate groups) and the second part including the thiol component are first allowed to react with each other, in the following reaction stages: 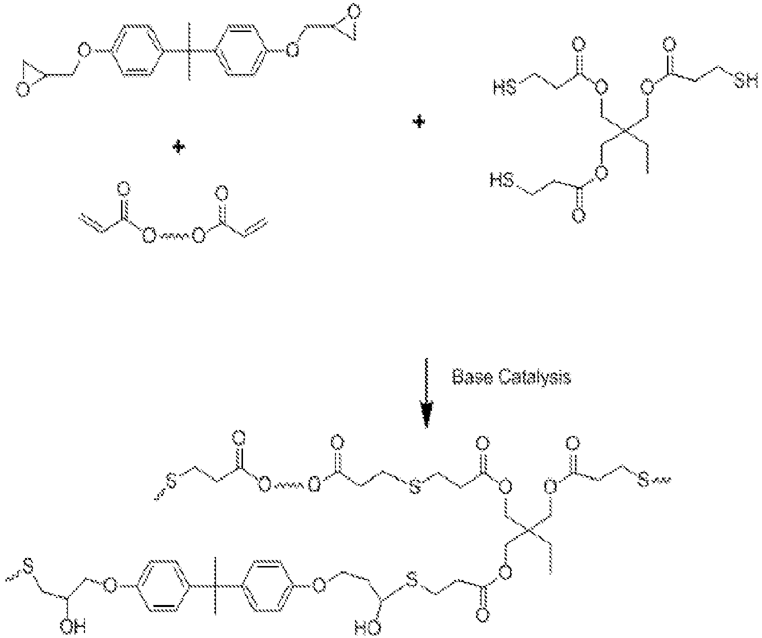 The epoxy thiol acrylate copolymer product of the above reaction stages are cured to form elastomers for the multipurpose epoxy thiol acrylate layer. DMTA analysis of the cured multipurpose epoxy thiol acrylate layer exhibits a first tan δ peak that has a value from 0.10 to 0.80 (e.g., 0.40 to 0.55, etc.) at a temperature between -75 °C to 0 °C, and a second tan delta peak that has a value from 0.20 to 0.65 (e.g., 0.20 to 0.35, etc.) at a temperature between 20 °C and 75 °C.

The multipurpose single layer formed using the epoxy amine acrylate formulation offers, e.g., the ability to bridge cracks, resistance to common solvents and chemicals, mechanical strength, fast cure times, and lower viscosity. The epoxy amine acrylate formulation includes an epoxy component, an acrylate capped polyol component, and an amine component. The epoxy component includes at least one epoxy resin, such as a diglycidylether of bisphenol A epoxy resin and/or a diglycidylether of bisphenol F epoxy resin. The acrylate capped polyol component includes at least one compound that includes two acrylate moieties, which acrylate moieties are separated by a polyol backbone (e.g., a polyether polyol backbone). The acrylate capped polyol may have a number average molecular weight from 1000 to 8000. The acrylate capped polyol may be a urethane acrylate. The amine component includes, e.g., at least one selected from the group of aliphatic polyamines, arylaliphatic polyamines, cycloaliphatic polyamines, and aromatic polyamines.

The epoxy amine acrylate formulation includes a first part and a second part. The first part includes the epoxy component and the acrylate capped polyol component. The epoxy component is present in an amount from 20 wt% to 70 wt% (e.g., 30 wt% to 65 wt%, 35 wt% to 60 wt%, 40 wt% to 50 wt%, etc.), based on a total weight of the epoxy amine acrylate formulation. The acrylate capped polyol component is present in an amount from 20 wt% to 70 wt% (e.g., 30 wt% to 65 wt%, 35 wt% to 60 wt%, 40 wt% to 50 wt%, etc.) based on the total weight of the epoxy amine acrylate formulation.

The second part includes the amine component, and optionally includes at least one catalyst. The amine component is present in an amount from 5 wt% to 50 wt% (e.g., 10 wt% to 40 wt%, 10 wt% to 30 wt%, 15 wt% to 25 wt%, etc.), based on the total weight of the epoxy amine acrylate formulation. As would be obvious to a person of ordinary skill in the art, the above weight percentages are based on a total of 100 wt% of the epoxy amine acrylate formulation.

The epoxy amine acrylate copolymer product of the above are cured to form the multipurpose epoxy amine acrylate layer. DMTA analysis of the cured multipurpose epoxy thiol acrylate layer exhibits a first tan δ peak that has a value from 0.10 to 0.80 (e.g., 0.40 to 0.55, etc.) at a temperature between -75 °C to 0 °C, and a second tan delta peak that has a value from 0.10 to 0.80 (e.g., 0.40 to 0.55, etc.) at a temperature between 20 °C and 75 °C.

The epoxy resins utilized in the epoxy prepolymer formulation, the epoxy-silane hybrid formulation, epoxy thiol acrylate formulation, and the epoxy amine acrylate formulation may include one or more of a suitable aromatic, aliphatic, or cycloaliphatic epoxy. Examples of epoxy resins include bisphenol-A epoxy resins (such as D.E.R.^{™} 331, and D.E.R.^{™} 383), bisphenol-A epoxy resin blends with reactive diluents (such as D.E.R.^{™} 323 and D.E.R.^{™} 324), bisphenol-F epoxy resins (such as D.E.R.^{™} 354), bisphenol-A/F epoxy resin blends (such as D.E.R.^{™} 353), aliphatic glycidyl ethers (such as D.E.R.^{™} 736), epoxy novolac resins (such as D.E.N.^{™} 425, D.E.N.^{™} 431, D.E.N.^{™} 431), and solid bisphenol-A epoxy resins. The epoxy resin may be used alone or as a epoxy resin blend that includes (i) an epoxy resin such as D.E.R. 383, D.E.R. 331, or D.E.R. 354, (ii) at least one of mono-, di-, tri-, and poly-glycidylethers of aliphatic epoxy resins and/or monoglycidylethers of aromatic epoxy resins, and iii) other reactive and non-reactive diluents. Examples of these are D.E.R. 736, D.E.R. 732, cresyl glycidyl ether, diglycidylether of aniline, Alkyl C₁₂-C₁₄ mono glycidyl ether 1,4-butanedioldiglycidylether, 1,6-hexane dioldiglycidyl ether, 2-ethylhexylglycidyl ether, neopentlyglycidylether, trimethylpropanetriglycidyl ether, and hydrocarbon resins. Mixtures of two or more aromatic epoxy resins may be used.

The amine component utilized in the epoxy amine acrylate formulation may include at least one selected from the group of aliphatic polyamines, arylaliphatic polyamines, cycloaliphatic polyamines, aromatic polyamines, polyalkoxypolyamines, phenalkamines, and combinations thereof. Examples of aliphatic polyamines include ethylenediamine (EDA), diethylenetriamine (DETA), triethylenetetramine (TETA), tetraethylenepentamine (TEPA), trimethyl hexane diamine (TMDA), hexamethylenediamine (HMDA), N-(2-aminoethyl)-1,3-propanediamine (N3-Amine), N,N'-1,2-ethanediylbis-1,3-propanediamine (N4-amine), and dipropylenetriamine. Examples of arylaliphatic polyamines include m-xylenediamine (mXDA), and p-xylenediamine. Examples of cycloaliphatic polyamines include 1,3-bisaminomethyl cyclohexane (1,3-BAC), isophorone diamine (IPDA), 4,4'-methylenebiscyclohexanamine, bis-(p-aminocyclohexyl) methane, and 1,2-diamino cyclohexane (1,2-DACH). Examples of aromatic polyamines include m-phenylenediamine, diaminodiphenylmethane (DDM) and diaminodiphenylsulfone (DDS).

The epoxy prepolymer formulation, epoxy-silane hybrid formulation, epoxy thiol acrylate formulation, and the epoxy amine acrylate formulation may optionally contain one or more catalysts. Examples of catalysts include salicylic acid, calcium nitrate, bisphenol A, bisphenol F, resorcinol, tris (2,4,6-dimethylamino methyl) phenol, hydroquinone and other carboxylic and/or phenolic group containing components. The one or more catalysts may be present in the range from 0.5 wt% to 10 wt%, based on the total weight of the formulation.

The epoxy prepolymer formulation, epoxy-silane hybrid formulation, epoxy thiol acrylate formulation, and the epoxy amine acrylate formulation may optionally contain a diluent or modifier component that includes one or more diluents and/or modifiers. For example, the epoxy amine acrylate formulation may optionally contain a diluent or modifier component that includes as at least one selected from the group of styrenated phenol, diisopropylnaphthalene, polyalkylene glycol, an ether of polyalkylene glycol, an ether of phenolic polyalkylene glycol, benzyl alcohol, and a high boiling mono- or polyhydric alcohol. The diluent or modifier component may be present in a range from 5 wt% to 50 wt%, based on the total weight of the formulation.

The epoxy prepolymer formulation, the epoxy-silane hybrid formulation, the epoxy thiol acrylate formulation, and the epoxy amine acrylate formulation, according to embodiments, may be used on various types of substrates, e.g., a concrete substrate, a stone substrate, a metallic substrate, and a plastic substrate. For example, the formulation may be applied to a surface of the substrate by a process that includes, e.g., at least one selected from the group of pouring, brushing, dipping, spraying, flow-coating, knife-coating, and rolling. According to embodiments, after being applied to the surface of the substrate, the formulation is cured at a temperature from -30° C to 50° C, and at a relative humidity from 10% to 90%, in less than one day (e.g., in a few minutes). The formulation in a cured state, i.e., as a cured coating layer, may have a thickness on the substrate from 5 µm to 25 cm.

The multipurpose single layers formed from each of the epoxy prepolymer formulation, the epoxy-silane hybrid formulation, the epoxy thiol acrylate formulation, and the epoxy amine acrylate formulation respectively, demonstrate a phase separated morphology between -75 °C and 75 °C. In particular, the multipurpose single layers, in a cured state, may exhibit a combined glass-rubber phase over a large range of temperatures, e.g., at least a 100 °C range of temperatures, between -50 °C and 50 °C. In particular, the multipurpose single layer, in a cured state, may exhibit a combined glass-rubber phase over a large range of temperatures, e.g., at least a 65 °C range of temperatures, between -25 °C and 40 °C. Accordingly, the multipurpose single layer may be able to maintain at least a partial rubbery flexible phase, instead of entirely transitioning to a breakable brittle glassy phase, at temperatures decrease below 0 °C without the use of flexibilizing agents or modifiers. Thus, the crack bridging, adhesive, etc., properties of the multipurpose single layer may be maintained at temperatures below 0 °C (e.g., at a temperature of -20 °C). Further, the material in the rubber phase provides for flexibility and the material in the glass phase acts as a reinforcing agent throughout the temperature range in which the phase separated morphology is realized.

The multipurpose single layers, which are epoxy based, may provide a simplified application process, in which one layer having multiple functions has a full cure time when applied to a substrate that is less than 24 hours (e.g., less than 12 hours, 10 hours or less, etc.). The process of forming the multipurpose single layers may also realize a gel time that is less than 6 hours (e.g., less than 5 hours, 4 hours or less, etc.). The multipurpose single layers may realize this simplified application process, while still having the ability to bridge cracks, provide adhesive characteristics, and provide chemical resistance.

In the use of sealing of cracked floors, room temperature curing systems for flooring applications that can meet a cure profile under ambient conditions, that can have the tensile strength and elongation to break targets desired for flexibility for this use, and/or can exhibit low moisture permeability. For example, the material may be a vapor barrier with a perm rating of 0.01 perms (when tested according to ASTM E96). Mechanical properties suitable for flooring such as elongation to break (%) range from 65 - 465% and corresponding tensile strength range from 88 - 530 psi for the base polymer systems. For example, the material may meet an elongation requirement that is at least 400% (according to ASTM D 3574-86). The elongation to break target values may be flexible and are based on using chemical grouts in tunnels that have movement. It is believed that in such applications, a floor should have a similar amount of movement (although the movement in the vertical direction may be more with a floor) as tunnels are not subjected to loadings (similar to a forklift moving on a floor surface).

As used herein, molecular weight of the components such as the polyol is intended to designate the number average molecular weight. Unless otherwise indicated, all percentages are based on weight percent.

### Examples

Plaques using the epoxy prepolymer formulation, the epoxy-silane hybrid formulation, the epoxy thiol acrylate formulation, and the epoxy amine acrylate formulation plaques are prepared according to Examples 1-7 and Comparative Example 8, below. The formulations are mixed using a Flack Tek mixer for 0.5 minute at 800 rpm followed by 2 minutes at 1600 rpm to form mixtures. The mixtures are then centrifuged for 5 minutes at 2500 rpm and poured into molds to form samples that are cured to form plaques.

After being prepared, Examples 1 and 2, below, are immediately poured into open molds at 25° C, and allowed to cure for 24 hours, to obtain the plaques. The first and second parts of Examples 3-7 and Comparative Example 8, below, are first each separately mixed in a dual asymmetric centrifuge mixer at room temperature. Then, the first and second parts of Examples 3-7 and Comparative Example 8 are mixed, and immediately poured into open molds at room temperature and atmospheric pressure, and allowed to cure for 24 hours, to obtain the plaques.

Epoxy prepolymer formulations are based on the following components and utilized in the amounts as given in Table 1, below:
- Epoxy Prepolymer E1: An epoxy prepolymer that is a reaction product of an excess amount of DER 383™ with Jeffamine® T5000. DER 383™ is an epoxy resin that is a reaction product of Bisphonol A and epichlorohydrin (available from The Dow Chemical Company). Jeffamine® T5000 is a polyetheramine that is a trifunctional primary amine having an average molecular weight of 5000 (available from Huntsman). A reaction mixture for forming the epoxy prepolymer includes 5 equivalents of DER™ 383 and 1 equivalent of Jeffamine® T 5000. This adduct of Jeffamine® includes 49 % by mass of DER™ 383.
- Amine hardener AM1: An amine hardener blend including 1,3-cyclohexanedimethanamine (22 wt%), aminoethylpiperazine (26 wt%), styrenated phenol (40 wt%), salicylic Acid (10 wt%), and diisopropylnaphthalene isomers/n-, i-, Cyclo-aliphatic mixtures (2 wt%).
- Amine hardener AM2: An amine hardener that is a reaction product of excess BPEA (bis(2-(piperazin-1yl))ethyl amine) with commercially available fatty acids (UNIDYME 22 and SYLFAT FA2), and the calculated amine hydrogen equivalent weight of the product is around 200gms/eq NH.

**Table 1**

| | **Example 1** (wt%) | **Example 2** (wt%) |
|---|---|---|
| Epoxy prepolymer E1 | 83.4 | 67.2 |
| Amine hardener AM1 | 16.6 | --- |
| Amine hardener AM2 | --- | 33.8 |

Epoxy-silane hybrid formulations are based on the following components and utilized in the amounts as given in Table 2, below:
- Airstone™ 780E: A liquid epoxy resin that is a blend of D.E.R.™ 383 and butanediol diglycidyl ether (available from The Dow Chemical Company).
- DBTAA: A dibutyltin-diacetylacetonate catalyst.
- Calcium carbonate: Ground Limestone (available from Imerys Performance Minerals).
- VORASIL™ 604: A resin of a silane-modified polyether polymer that has a polyurethane backbone and silane end groups (available from The Dow Chemical Company).
- DEH™ 24: A triethylenetetramine (TETA) amine hardener (available from The Dow Chemical Company).
- Silquest® A1110: A 3-aminopropyltrimethoxysilane (from available from Momentive Performance Materials).
- Silquest® A171: A vinyltrimethoxysilane (from available from Momentive Performance Materials).
- Talc: Talc powder

**Table 2**

| | | **Example 3** (wt%) | **Example 4** (wt%) |
|---|---|---|---|
| First Part | Airstone™ 780E | 32.6 | 49 |
| | DBTAA | 0.5 | 0.5 |
| | Water | 0.2 | 0.2 |
| | Calcium Carbonate | 19.8 | 13.1 |
| Second Part | VORASIL™ 604 | 32.7 | 25.0 |
| | DEH™ 24 | 3.3 | 5.0 |
| | Silquest® A1110 | 0.9 | 1.0 |
| | Silquest® A171 | 0.2 | 0.2 |
| | Talc | 10 | --- |
| | Calcium Carbonate | --- | 6.0 |

Epoxy thiol acrylate formulations are based on the following components and utilized in the amounts as given in Table 3, below:
- D.E.R™ 383: An epoxy resin that is a reaction product of Bisphonol A and epichlorohydrin, having an average viscosity @ 25°C (mPa•s) of 9000 -10500 (available from The Dow Chemical Company).
- Acrylate capped polyol: A 5 wt% urethane polyol capped with 2-hydroxyethyl acrylate (HEA) having a functionality of 2, an NCO content of 2%, and an average equivalent weight of 2250.
- TMPTMP: A trimethylolpropane tris(3-mercaptopropionate).
- DMPT: An alkyl trithiol that is 2,3-bis((2-mercaptoethyl)thio)-1-propanethiol (available from Bruno Bock under the trademark Thiocure®).
- DBU: A 1,8-Diazabicyclo-5,4,0-undecene-7 catalyst.

**Table 3**

| | | **Example 5** (wt%) |
|---|---|---|
| First Part | DER™ 383 | 30.6 |
| | Acrylate capped polyol | 45.9 |
| Second Part | TMPTMP | 19.2 |
| | Alkyl Trithiol | 4.2 |
| | DBU | 0.01 |

Epoxy amine acrylate formulations are based on the following components and utilized in the amounts as given in Table 4, below:
- D.E.R™ 324: An epoxy resin (available from The Dow Chemical Company).
- Acrylate capped polyol: An acrylate that has 5 wt% urethane polyol capped with 2-hydroxyethyl acrylate (HEA), having a functionality of 2, an NCO content of 2%, and an average equivalent weight of 2250.
- D.E.H. 39: An aminoethylpiperazine (AEP) based amine curing agent (available from The Dow Chemical Company).
- Amine hardener AM3: An amine hardener blend including aminoethylpiperazine (50wt%) Styrenated phenol (50wt%).
- Ancamine™ 2390: An amine hardener (available from Air Products).

**Table 4**

| | | **Example 6** (wt%) | **Example 7** (wt%) | **Comparative Example 8** (wt%) |
|---|---|---|---|---|
| First Part | D.E.R™ 324 | 44.7 | 40.4 | 49.5 |
| | Acrylate capped polyol | 44.7 | 40.4 | -- |
| Second Part | D.E.H. 39 | 10.6 | -- | -- |
| | Amine hardener AM3 | -- | 19.2 | -- |
| | Ancamine™ 2390 | -- | -- | 50.5 |

Examples 1-5 are subject to the following tests in Table 5, below:

**Table 5**

| | **Example 1** | **Example 2** | **Example 3** | **Example 4** | **Example 5** |
|---|---|---|---|---|---|
| Gel time (hours) | 4 | 3.75 | 1 | 0.85 | 2.5 |
| Full cure time (hours) | 6 | 7 | 10* | 10* | 3.5 |
| Glass crack bridging peak load (µm) | 700-900 | 2250 | 1017 | 749 | 1602 |
| Glass crack bridging failure (mm) | 1.4 | 3.6 | 1.7 | 1.0 | 2.3 |
| Shore A hardness | 93 | 87 | 68 | 82 | 75 |
| Tensile strength (MPa) | 13.4 | 4.4 | 2.0 | 4.1 | 5.7 |
| Elongation to break at 23 °C (%) | 71 | 71 | 60 | 40 | 133 |
| Modulus (MPa) | 171 | 50 | 14.7 | 21.1 | 10.6 |

| | | | | | |
|---|---|---|---|---|---|
| * Demonstrated slight streaking up to 10 hours. | | | | | |

Referring to Table 5, to measure the gel time and full cure time, thin 150 micron coats of Examples 1-5 are independently coated on glass substrates. The coated glass substrates are then immediately transferred to a BK drying time recorder, which measures the cure times by observing how a thin moving needle drags through the coatings on the glass strip. The gel time is considered to be the point where the needle no longer penetrates the coatings and starts skimming the surface of the coatings. The full cure time is considered to be the point where the needle no longer streaks the surface or creates a significantly lower level of streaking on the coatings. The gel time is determined by ASTM D 2471 on a Gardner Gel Timer.

Crack bridging properties is measured using a modified version of DIN EN 1062-7 (Determination of bridge cracking properties) in which a glass substrate is used instead of a concrete or mortar substrate. Before the coating of Examples 1-5 are applied, the glass substrates are first coated with a 40 to 90 µm thick epoxy primer layer. The primer system chosen is a representative of the system that is typically applied for concrete substrates. The primer system used was DER™ 353 epoxy resin cured with DEH™ 7009 hardener both of which are available through The Dow Chemical Company. The ratio of epoxy resin to hardener for the primer is 70 wt% to 30 wt%, respectively. The applied primer system is allowed to cure for at least 24 hours before the coatings of Examples 1-5 are applied. Further, for the purpose of precision measurement in a load/strain, MTS® Alliance RT/10 test machine is used.

With respect to the testing, cracks are generated in glass substrates that are already coated with one of the coatings of Examples 1-5 by scoring the glass substrate from the back and applying slight pressure. The cracked glass substrates are then pulled apart slowly at the rate of 0.5mm/min in the MTS® Alliance RT/10 load/strain test machine to see at what point the coating fails, which point of failure is measured as the glass crack bridging failure shown in Table 4. The onset of mechanical instability is measured as the glass crack bridging peak load shown in Table 4.

To measure Shore A hardness, according to ASTM D-2240, a durometer is used to measure the hardness of the plaques prepared using Examples 1-5, 24 hours after the plaques are made. The approximately 3 mm thick samples are double stacked so that the hardness of the underlying substrate does not influence the Shore A hardness measurement. Further, tensile strength, elongation at break, and modulus are measured according to ASTM D-1708, in which microtensile tests are performed on dog bones cut out from the plaques that are made using Examples 1-5.

Examples 6 and 7 and Comparative Example 8 are subject to the following tests in Table 6, below:

**Table 6**

| | **Example 6** | **Example 7** | **Comparative Example 8** |
|---|---|---|---|
| Gel time (hours) | 1.9 | 0.57 | 0.65 |
| Dry Time (TFST)- Dust free (hours) | >12 | 8.5 | 9 |
| Elongation to break at 25 °C (%) | 175 | 125 | 95 |
| Elongation to break at -18 °C (%) | 135 | 126 | 10 |

To measure the gel time approximately 100 g of formulation components are weighed and pre-mixed in a sample cup. The timer on the gel timer was started immediately after mixing began. The sample cup is then placed under the gel timer where the wire stirrer is attached (special attention should be paid to ensure the wire is hanging into the center of the sample cup). The time to gel was reported in hours. The gel time is determined by ASTM D 2471 on a Gardner Gel Timer. Dry times are determined by ASTM D 5895 using a BYK dry time recorder at the 48 hour speed setting. The test room temperature is 23 °C. The end of a third stage is reported as the dust free time and a point at which the needle no longer penetrates the film is reported as the dry through time.

The elongation properties are measured in accordance with ASTM D-1708. In particular, specimens are loaded on an electromechanical Instron under ASTM lab conditions, and about 5 specimens are tested for each sample plaque. The properties were also analyzed at -18°C and 25°C.

In addition, dynamic mechanical thermal analysis (DMTA) of plaques of Examples 1-7 and Comparative Example 8 are performed, in accordance with Table 7, below.

The DMTA analysis uses a rheometer (a device that measures the flow of a liquid, suspension, or slurry) to detect glass-rubber transitions in materials. In particular, the DMTA analysis is conducted using a TA Instruments ARES Rheometer under a torsional mode from -100 °C to 100 °C at 3 °C per step. The test frequency is 1 Hz with a strain amplitude of 0.05%. The temperature at which the tan δ peak is located is recorded as the glass transition temperature. For the DMTA analysis the frequency of deformation is 6.28 rad/sec, the temperature ramp rate is 3C/min, and the mode of deformation is torsional mode. The DMTA analysis is useful for determining at what temperature certain materials transition from a rubbery flexible phase to a breakable brittle glassy phase, as temperatures decrease.

The DMTA analysis measures G' as the storage modulus, which represents the elastic behavior of the examples. The DMTA analysis also measures G" as the loss modulus, which represents the viscous properties of the example. Further, tan δ = G"/ G', as such a peak in the tan δ corresponds to a point at which the difference between the storage modulus and the loss modulus is minimized. The results of the tan δ plot are shown in Table 7, below:

**Table 7**

| | **Ex**. **1** | **Ex**. **2** | **Ex. 3** | **Ex**. **4** | **Ex**. **5** | **Ex. 6** | **Ex**. **7** | **Comp**. **Ex**. **8** |
|---|---|---|---|---|---|---|---|---|
| Tan δ First Peak - Temperature (°C) | -48.2 | -56.0 | -46.9 | -45.7 | -42.9 | -50 | -46.6 | -- |
| Tan δ First Peak - Ratio of loss modulus to storage modulus | 0.21 | 0.16 | 0.71 | 0.58 | 0.42 | 0.42 | 0.32 | -- |
| Tan δ Second Peak - Temperature (°C) | 58.2 | 39.0 | 63.1 | 58.4 | 33.5 | 66.9 | 59.5 | 42.2 |
| Tan δ Second Peak - Ratio of loss modulus to storage modulus | 0.40 | 0.53 | 0.27 | 0.32 | 0.27 | 0.29 | 0.32 | 0.68 |
| Temperature Range between First Peak and Second Peak | 106.7 | 95 | 110 | 104.1 | 76.4 | 116.9 | 106.1 | -- |
| Temperature Range between bottom of First Peak and adjacent bottom of Second Peak (°C) | 60 | 40 | 60 | 60 | 45 | 67 | 67 | -- |

Examples 1 to 7 exhibit two tan δ peaks, in which a tan δ first peak is between 0 °C to -75 °C and a tan δ second peak is between 20 °C to 75 °C. In contrast, Comparative Example 8 exhibits a single tan δ peak between 20 °C to 75 °C. Without intending to be bound by this theory, the two tan δ peaks are indicative of two glass transition temperatures and excellent flexibility at room temperature and at lower temperatures (e.g., less than 0 °C). However, Comparative Example 8 would fail to provide this excellent flexibility at room temperature and at lower temperatures (e.g., less than 0°C) based on the lack of a tan δ peak at such lower temperatures. For example, the failure of Comparative Example 8 is demonstrated in Table 6, above.

In an exemplary case (e.g., for use a sealant for cracked floors), the following epoxy-silane hybrid formulations that are based on the following components and utilized in the amounts as given in Table 2, below, may be used.
- Airstone™ 780E: A liquid epoxy resin that is a blend of D.E.R.™ 383 and butanediol diglycidyl ether (available from The Dow Chemical Company).
- DBTAA: A dibutyltin-diacetylacetonate catalyst.
- VORASIL™ 602: A resin of a silane-modified polyether polymer that has a polyurethane backbone and silane end groups (available from The Dow Chemical Company).
- DEH™ 24: A triethylenetetramine (TETA) amine hardener (available from The Dow Chemical Company).
- Silquest® A1110: A 3-aminopropyltrimethoxysilane (from available from Momentive Performance Materials).
- Silquest® A171: A vinyltrimethoxysilane (from available from Momentive Performance Materials).

**Table 8**

| | | **Example 9** (wt%) | **Example 10** (wt%) |
|---|---|---|---|
| First Part | Airstone™ 780E | 31.3 | 46.0 |
| | DBTAA | 0.5 | 0.5 |
| | Water | 0.2 | 0.2 |
| Second Part | VORASIL™ 602 | 62.6 | 46.0 |
| | DEH™ 24 | 4.1 | 6.1 |
| | Silquest® A1110 | 1.0 | 1.0 |
| | Silquest® A171 | 0.3 | 0.2 |

As shown above in Table 8, the calcium carbonate may be excluded from the First Part and both calcium carbonate and talc may be excluded from the Second Part, as compared to Examples 3 and 4 discussed above with respect to Table 2.

Examples 9 and 10 are evaluated for elongation at break (according to ASTM D1708), tensile strength (in the units of psi and according to ASTM D1708), Shore A hardness (according to ASTM D2240), and transmission rate (in the units of g/m²*day, according to Moisture Vapor Transmission Rate as known in the art and use a IMocon Permatran-W 700 Instrument), as shown below in Table 9.

**Table 9**

| | **Example 9** | **Example 10** |
|---|---|---|
| Elongation at break (%) | 465 | 387 |
| Tensile strength (psi) | 177 | 216 |
| Shore A hardness | 25 | 35 |
| Transmission Rate (g/[m²*day]) | 86 | 67 |

While fillers could be added to provide modulus increase and/or to decrease costs, such fillers may also be excluded.

## Claims

1. A coating composition, comprising:
a coating agent that is a reaction product of an epoxy based formulation, the epoxy based formulation being a least one selected from the group of an epoxy prepolymer formulation, an epoxy-silane hybrid formulation, an epoxy thiol acrylate, and an epoxy amine acrylate formulation, wherein:
the coating agent in a cured state exhibits a first tan delta peak between a first temperature range of -75 °C to 0 °C and a second tan delta peak between a second temperature range of 20 °C and 75 °C, according to a tan delta plot over a range of temperatures, and
a value of the first tan delta peak and a value of the second tan delta peak each represents a ratio of a loss modulus of the coating agent and a storage modulus of the coating agent at a specific temperature within the range of temperatures, as measured according to dynamic mechanical thermal analysis, the values of the first and the second tan delta peaks being from 0.10 to 0.80.

2. The coating composition as claimed in claim 1, wherein:
the coating agent is the reaction product of the epoxy prepolymer formulation, which includes an epoxy terminated polyether prepolymer and an amine hardener component, the amine hardener component being present in the epoxy prepolymer formulation in an amount from 5 wt% to 45 wt%, based on a total weight of the epoxy prepolymer formulation, and
the epoxy terminated polyether prepolymer is a product of a reaction mixture that includes a polyetheramine having a amine hydrogen functionality from 2 to 4 and an aromatic epoxy resin, an equivalent weight of the aromatic epoxy resin in the reaction mixture being at least three times greater than an equivalent weight of the aromatic epoxy resin that is stoichiometrically required for reaction with the polyetheramine to form the epoxy terminated prepolymer.

3. The coating composition as claimed in claim 2, wherein the value of the first tan delta peak is from 0.10 to 0.30 and the value of the second tan delta peak is from 0.30 to 0.60.

4. The coating composition as claimed in claim 1, wherein:
the coating agent is the reaction product of the epoxy-silane hybrid formulation, which includes an epoxy component, an amine component, and a silane component, and
the silane component includes a silane-modified polymer that has a polyurethane backbone and silane end groups, the silane-modified polymer being present in the epoxy-silane hybrid formulation in an amount from 20 wt% to 40 wt%, based on a total weight of the epoxy-formulation.

5. The coating composition as claimed in claim 4, wherein the value of the first tan delta peak is from 0.50 to 0.80 and the value of the second tan delta peak is from 0.20 to 0.40.

6. The coating composition as claimed in claim 1, wherein:
the coating agent is the reaction product of the epoxy thiol acrylate formulation, which includes an epoxy component, an acrylate capped polyol component, and a thiol component,
the epoxy thiol acrylate formulation includes from 35 wt% to 60 wt% of the acrylate capped polyether polyol component, based on the total weight of the epoxy thiol acrylate formulation, and
the thiol component includes an alkyl dithiol or an alkyl trithiol, the thiol component being present in the epoxy thiol acrylate formulation in an amount from 15 wt% to 40 wt%, based on the total weight of the epoxy thiol acrylate formulation.

7. The coating composition as claimed in claim 6, wherein the value of the first tan delta peak is from 0.40 to 0.55 and the value of the second tan delta peak is from 0.20 to 0.35.

8. The coating composition as claimed in claim 1, wherein:
the coating agent is the reaction product of the epoxy amine acrylate formulation, which includes an epoxy component, an acrylate capped polyether polyol component, and a amine component,
the epoxy amine acrylate formulation includes from 20 wt% to 70 wt% of the epoxy component, based on a total weight of the epoxy amine acrylate formulation,
the acrylate capped polyol component is present in the epoxy amine acrylate formulation in an amount from 20 wt% to 70 wt%, based on the total weight of the epoxy amine acrylate formulation, and
the amine component is present in the epoxy amine acrylate formulation in an amount from 5 wt% to 50 wt%, based on the total weight of the epoxy amine acrylate formulation.

9. The coating composition as claimed in claim 8, wherein:
the epoxy component includes at least one selected from the group of a bisphenol A diglycidyl ether, a bisphenol F diglycidyl ether, and an aliphatic glycidyl ether, and
the amine component includes at least one selected from the group of an aliphatic polyamine, an arylaliphatic polyamine, a cycloaliphatic polyamine, and an aromatic polyamine.

10. The coating composition as claimed in claim 8, wherein:
a diluent or modifier component is present in the epoxy amine acrylate formulation in an amount from 5 wt% to 50 wt%, based on the total weight of the epoxy amine acrylate formulation, and
the diluent or modifier component includes at least one selected from the group of styrenated phenol, diisopropylnaphthalene, polyalkylene glycol, an ether of polyalkylene glycol, an ether of phenolic polyalkylene glycol, benzyl alcohol, and a high boiling mono- or polyhydric alcohol.

11. The coating composition as claimed in any one of claims 1-10, wherein the reaction product of the epoxy based formulation is a flooring layer that forms a flexible layer and a mechanical wear resistant top layer of a flooring application.

12. The coating composition as claimed in any one of claims 1-10, wherein the reaction product of the epoxy based formulation is a flooring layer that forms a flexible layer and an abrasion resistant top layer of a flooring application.

13. The coating composition as claimed in any one of claims 1-10, wherein the reaction product of the epoxy based formulation is a flooring layer that forms a flexible layer and a chemical resistant top layer of a flooring application.

14. The coating composition as claimed in any one of claims 1-10, wherein the reaction product of the epoxy based formulation is a flooring layer that forms a primer layer and a flexible layer of a flooring application

15. The coating composition as claimed in any one of claims 1-10, wherein the reaction product of the epoxy based formulation the coating agent forms an epoxy based flexible crack bridging layer.

## Patentansprüche

1. Eine Beschichtungszusammensetzung, die Folgendes beinhaltet:
ein Beschichtungsmittel, das ein Reaktionsprodukt einer Formulierung auf Epoxidbasis ist, wobei die Formulierung auf Epoxidbasis mindestens eine ist, die ausgewählt ist aus der Gruppe von einer Epoxid-Prepolymer-Formulierung, einer Epoxid-Silan-Hybridformulierung, einem Epoxid-Thiol-Acrylat und einer Epoxid-Amin-Acrylat-Formulierung, wobei:
das Beschichtungsmittel in einem ausgehärteten Zustand einen ersten Tan-Delta-Peak in einem ersten Temperaturbereich von -75 °C bis 0 °C und einen zweiten Tan-Delta-Peak in einem zweiten Temperaturbereich von 20 °C bis 75 °C, gemäß einer Tan-Delta-Darstellung über einen Temperaturbereich, aufzeigt und
ein Wert des ersten Tan-Delta-Peaks und ein Wert des zweiten Tan-Delta-Peaks jeweils ein Verhältnis eines Verlustmoduls des Beschichtungsmittels und eines Speichermoduls des Beschichtungsmittels bei einer bestimmten Temperatur innerhalb des Temperaturbereichs, wie gemäß dynamisch-mechanischer Thermo-Analyse gemessen, darstellt, wobei die Werte des ersten und des zweiten Tan-Delta-Peaks zwischen 0,10 und 0,80 liegen.

2. Beschichtungszusammensetzung gemäß Anspruch 1, wobei:
das Beschichtungsmittel das Reaktionsprodukt der Epoxid-Prepolymer-Formulierung ist, die ein epoxidterminiertes Polyether-Prepolymer und eine Aminhärterkomponente umfasst, wobei die Aminhärterkomponente in der Epoxid-Prepolymer-Formulierung in einer Menge von 5 Gew.-% bis 45 Gew.-% vorhanden ist, bezogen auf ein Gesamtgewicht der Epoxid-Prepolymer-Formulierung, und
das epoxidterminierte Polyether-Prepolymer ein Produkt einer Reaktionsmischung ist, die ein Polyetheramin mit einer Aminwasserstofffunktionalität von 2 bis 4 und ein aromatisches Epoxidharz umfasst, wobei ein Äquivalentgewicht des aromatischen Epoxidharzes in der Reaktionsmischung mindestens dreimal größer ist als ein Äquivalentgewicht des aromatischen Epoxidharzes, das stöchiometrisch für die Reaktion mit dem Polyetheramin erforderlich ist, um das epoxidterminierte Prepolymer zu bilden.

3. Beschichtungszusammensetzung gemäß Anspruch 2, wobei der Wert des ersten Tan-Delta-Peaks 0,10 bis 0,30 beträgt und der Wert des zweiten Tan-Delta-Peaks 0,30 bis 0,60 beträgt.

4. Beschichtungszusammensetzung gemäß Anspruch 1, wobei:
das Beschichtungsmittel das Reaktionsprodukt der Epoxid-Silan-Hybridformulierung ist, die eine Epoxidkomponente, eine Aminkomponente und eine Silankomponente umfasst, und
die Silankomponente ein silanmodifiziertes Polymer umfasst, das eine Polyurethan-Hauptkette und Silan-Endgruppen umfasst, wobei das silanmodifizierte Polymer in der Epoxid-Silan-Hybridformulierung in einer Menge von 20 Gew.-% bis 40 Gew.-%, bezogen auf ein Gesamtgewicht der Epoxid-Formulierung, vorhanden ist.

5. Beschichtungszusammensetzung gemäß Anspruch 4, wobei der Wert des ersten Tan-Delta-Peaks 0,50 bis 0,80 beträgt und der Wert des zweiten Tan-Delta-Peaks 0,20 bis 0,40 beträgt.

6. Beschichtungszusammensetzung gemäß Anspruch 1, wobei:
das Beschichtungsmittel das Reaktionsprodukt der Epoxid-Thiol-Akrylat-Formulierung ist, die eine Epoxidkomponente, eine mit Akrylat verkappte Polyolkomponente und eine Thiolkomponente umfasst,
die Epoxid-Thiol-Akrylat-Formulierung zu 35 Gew.-% bis 60 Gew.-% die mit Acrylat verkappte Polyetherpolyolkomponente, bezogen auf das Gesamtgewicht der Epoxid-Thiol-Akrylat-Formulierung, umfasst und
die Thiolkomponente ein Alkyldithiol oder ein Alkyltrithiol umfasst, wobei die Thiolkomponente in der Epoxid-Thiol-Akrylat-Formulierung in einer Menge von 15 Gew.-% bis 40 Gew.-%, bezogen auf das Gesamtgewicht der Epoxid-Thiol-Akrylat-Formulierung, vorhanden ist.

7. Beschichtungszusammensetzung gemäß Anspruch 6, wobei der Wert des ersten Tan-Delta-Peaks 0,40 bis 0,55 beträgt und der Wert des zweiten Tan-Delta-Peaks 0,20 bis 0,35 beträgt.

8. Beschichtungszusammensetzung gemäß Anspruch 1, wobei:
das Beschichtungsmittel das Reaktionsprodukt der Epoxid-Amin-Akrylat-Formulierung ist, die eine Epoxidkomponente, eine mit Akrylat verkappte Polyetherpolyolkomponente und eine Aminkomponente umfasst,
die Epoxid-Amin-Akrylat-Formulierung zu 20 Gew.-% bis 70 Gew.-% die Epoxidkomponente, bezogen auf ein Gesamtgewicht der Epoxid-Amin-Akrylat-Formulierung, umfasst,
die mit Akrylat verkappte Polyolkomponente in der Epoxid-Amin-Akrylat-Formulierung in einer Menge von 20 Gew.-% bis 70 Gew.-%, bezogen auf das Gesamtgewicht der Epoxid-Amin-Akrylat-Formulierung, vorhanden ist und
die Aminkomponente in der Epoxid-Amin-Akrylat-Formulierung in einer Menge von 5 Gew.-% bis 50 Gew.-%, bezogen auf das Gesamtgewicht der Epoxid-Amin-Akrylat-Formulierung, vorhanden ist.

9. Beschichtungszusammensetzung gemäß Anspruch 8, wobei:
die Epoxidkomponente mindestens eines umfasst, das ausgewählt ist aus der Gruppe von einem Bisphenol-A-Diglycidylether, einem Bisphenol-F-Diglycidylether und einem aliphatischen Glycidylether, und
die Aminkomponente mindestens eines umfasst, das ausgewählt ist aus der Gruppe von einem aliphatischen Polyamin, einem arylaliphatischen Polyamin, einem cycloaliphatischen Polyamin und einem aromatischen Polyamin.

10. Beschichtungszusammensetzung gemäß Anspruch 8, wobei:
eine Verdünnungsmittel- oder Modifikatorkomponente in der Epoxid-Amin-Akrylat-Formulierung in einer Menge von 5 Gew.-% bis 50 Gew.-%, bezogen auf das Gesamtgewicht der Epoxid-Amin-Akrylat-Formulierung, vorhanden ist und
die Verdünnungsmittel- oder Modifikatorkomponente mindestens eines umfasst, das ausgewählt ist aus der Gruppe von styroliertem Phenol, Diisopropylnaphthalin, Polyalkylenglykol, einem Ether von Polyalkylenglykol, einem Ether von phenolischem Polyalkylenglykol, Benzylalkohol und einem hochsiedenden ein- oder mehrwertigen Alkohol.

11. Beschichtungszusammensetzung gemäß einem der Ansprüche 1-10, wobei das Reaktionsprodukt der Formulierung auf Epoxidbasis eine Bodenbelagschicht ist, die eine flexible Schicht und eine gegenüber mechanischer Abnutzung resistente Deckschicht einer Bodenbelaganwendung bildet.

12. Beschichtungszusammensetzung gemäß einem der Ansprüche 1-10, wobei das Reaktionsprodukt der Formulierung auf Epoxidbasis eine Bodenbelagschicht ist, die eine flexible Schicht und eine abriebfeste Deckschicht einer Bodenbelaganwendung bildet.

13. Beschichtungszusammensetzung gemäß einem der Ansprüche 1-10, wobei das Reaktionsprodukt der Formulierung auf Epoxidbasis eine Bodenbelagschicht ist, die eine flexible Schicht und eine chemikalienechte Deckschicht einer Bodenbelaganwendung bildet.

14. Beschichtungszusammensetzung gemäß einem der Ansprüche 1-10, wobei das Reaktionsprodukt der Formulierung auf Epoxidbasis eine Bodenbelagschicht ist, die eine Primerschicht und eine flexible Schicht einer Bodenbelaganwendung bildet.

15. Beschichtungszusammensetzung gemäß einem der Ansprüche 1-10, wobei das Reaktionsprodukt der Formulierung auf Epoxidbasis das Beschichtungsmittel eine flexible Rissüberbrückungsschicht auf Epoxidbasis bildet.

## Revendications

1. Une composition de revêtement, comprenant :
un agent de revêtement qui est un produit de la réaction d'une formulation à base d'époxy, la formulation à base d'époxy étant au moins un élément sélectionné dans le groupe constitué d'une formulation de prépolymère époxy, d'une formulation hybride d'époxy-silane, d'un époxy thiol acrylate, et d'une formulation d'époxy amine acrylate, dans laquelle :
l'agent de revêtement dans un état durci présente un premier pic de tangente delta compris dans une première plage de températures de -75 °C à 0 °C et un deuxième pic de tangente delta compris dans une deuxième plage de températures de 20 °C à 75 °C, selon une courbe de la tangente delta sur une plage de températures, et
une valeur du premier pic de tangente delta et une valeur du deuxième pic de tangente delta représentent chacune un rapport d'un module de perte de l'agent de revêtement et d'un module de conservation de l'agent de revêtement à une température spécifique au sein de la plage de températures, mesurés selon une analyse thermique mécanique dynamique, les valeurs du premier et du deuxième pic de tangente delta allant de 0,10 à 0,80.

2. La composition de revêtement telle que revendiquée dans la revendication 1, dans laquelle :
l'agent de revêtement est le produit de la réaction de la formulation de prépolymère époxy, qui inclut un prépolymère de polyéther à terminaison époxy et un constituant durcisseur amine, le constituant durcisseur amine étant présent dans la formulation de prépolymère époxy dans une quantité allant de 5 % en poids à 45 % en poids, rapporté à un poids total de la formulation de prépolymère époxy, et
le prépolymère de polyéther à terminaison époxy est un produit d'un mélange réactionnel qui inclut une polyétheramine ayant une fonctionnalité hydrogène d'amine allant de 2 à 4 et une résine époxy aromatique, un poids équivalent de la résine époxy aromatique dans le mélange réactionnel étant au moins trois fois supérieur à un poids équivalent de la résine époxy aromatique qui est nécessaire d'un point de vue stoechiométrique pour que la réaction avec la polyétheramine forme le prépolymère à terminaison époxy.

3. La composition de revêtement telle que revendiquée dans la revendication 2, dans laquelle la valeur du premier pic de tangente delta va de 0,10 à 0,30 et la valeur du deuxième pic de tangente delta va de 0,30 à 0,60.

4. La composition de revêtement telle que revendiquée dans la revendication 1, dans laquelle :
l'agent de revêtement est le produit de la réaction de la formulation hybride d'époxysilane, qui inclut un constituant époxy, un constituant amine, et un constituant silane, et le constituant silane inclut un polymère modifié par un silane qui a un squelette polyuréthane et des groupes terminaux silane, le polymère modifié par un silane étant présent dans la formulation hybride d'époxy-silane dans une quantité allant de 20 % en poids à 40 % en poids, rapporté à un poids total de la formulation d'époxy.

5. La composition de revêtement telle que revendiquée dans la revendication 4, dans laquelle la valeur du premier pic de tangente delta va de 0,50 à 0,80 et la valeur du deuxième pic de tangente delta va de 0,20 à 0,40.

6. La composition de revêtement telle que revendiquée dans la revendication 1, dans laquelle :
l'agent de revêtement est le produit de la réaction de la formulation d'époxy thiol acrylate, qui inclut un constituant époxy, un constituant polyol coiffé par un acrylate, et un constituant thiol,
la formulation d'époxy thiol acrylate inclut de 35 % en poids à 60 % en poids du constituant polyol de polyéther coiffé par un acrylate, rapporté au poids total de la formulation d'époxy thiol acrylate, et
le constituant thiol inclut un alkyldithiol ou un alkyltrithiol, le constituant thiol étant présent dans la formulation d'époxy thiol acrylate dans une quantité allant de 15 % en poids à 40 % en poids, rapporté au poids total de la formulation d'époxy thiol acrylate.

7. La composition de revêtement telle que revendiquée dans la revendication 6, dans laquelle la valeur du premier pic de tangente delta va de 0,40 à 0,55 et la valeur du deuxième pic de tangente delta va de 0,20 à 0,35.

8. La composition de revêtement telle que revendiquée dans la revendication 1, dans laquelle :
l'agent de revêtement est le produit de la réaction de la formulation d'époxy amine acrylate, qui inclut un constituant époxy, un constituant polyol de polyéther coiffé par un acrylate, et un constituant amine,
la formulation d'époxy amine acrylate inclut de 20 % en poids à 70 % en poids du constituant époxy, rapporté à un poids total de la formulation d'époxy amine acrylate, le constituant polyol coiffé par un acrylate est présent dans la formulation d'époxy amine acrylate dans une quantité allant de 20 % en poids à 70 % en poids, rapporté au poids total de la formulation d'époxy amine acrylate, et
le constituant amine est présent dans la formulation d'époxy amine acrylate dans une quantité allant de 5 % en poids à 50 % en poids, rapporté au poids total de la formulation d'époxy amine acrylate.

9. La composition de revêtement telle que revendiquée dans la revendication 8, dans laquelle :
le constituant époxy inclut au moins un élément sélectionné dans le groupe constitué d'un éther diglycidylique de bisphénol A, d'un éther diglycidylique de bisphénol F, et d'un éther glycidylique aliphatique, et
le constituant amine inclut au moins un élément sélectionné dans le groupe constitué d'une polyamine aliphatique, d'une polyamine arylaliphatique, d'une polyamine cycloaliphatique, et d'une polyamine aromatique.

10. La composition de revêtement telle que revendiquée dans la revendication 8, dans laquelle :
un constituant diluant ou modificateur est présent dans la formulation d'époxy amine acrylate dans une quantité allant de 5 % en poids à 50 % en poids, rapporté au poids total de la formulation d'époxy amine acrylate, et
le constituant diluant ou modificateur inclut au moins un élément sélectionné dans le groupe constitué du phénol styréné, du diisopropylnaphtalène, du polyalkylène glycol, d'un éther de polyalkylène glycol, d'un éther de polyalkylène glycol phénolique, de l'alcool benzylique, et d'un alcool mono- ou polyhydrique à haut point d'ébullition.

11. La composition de revêtement telle que revendiquée dans n'importe laquelle des revendications 1 à 10, dans laquelle le produit de la réaction de la formulation à base d'époxy est une couche de revêtement de sol qui forme une couche souple et une couche supérieure résistante à l'usure mécanique d'une application de revêtement de sol.

12. La composition de revêtement telle que revendiquée dans n'importe laquelle des revendications 1 à 10, dans laquelle le produit de la réaction de la formulation à base d'époxy est une couche de revêtement de sol qui forme une couche souple et une couche supérieure résistante à l'abrasion d'une application de revêtement de sol.

13. La composition de revêtement telle que revendiquée dans n'importe laquelle des revendications 1 à 10, dans laquelle le produit de la réaction de la formulation à base d'époxy est une couche de revêtement de sol qui forme une couche souple et une couche supérieure résistante à des produits chimiques d'une application de revêtement de sol.

14. La composition de revêtement telle que revendiquée dans n'importe laquelle des revendications 1 à 10, dans laquelle le produit de la réaction de la formulation à base d'époxy est une couche de revêtement de sol qui forme une couche d'apprêt et une couche souple d'une application de revêtement de sol.

15. La composition de revêtement telle que revendiquée dans n'importe laquelle des revendications 1 à 10, dans laquelle le produit de la réaction de la formulation à base d'époxy l'agent de revêtement forme une couche de colmatage de fissures souple à base d'époxy.
